# EUROPEAN PATENT APPLICATION

(11) **EP 4 009 421 A1**
(43) Date of publication of application: **08.06.2022**
(21) Application number: 21197442.3
(22) Date of filing: 17.09.2021
(51) Int. Cl.: H01M 16/00, H01M 8/04537, H01M 8/04858, H01M 8/043

(54) **FUEL CELL SYSTEM AND FUEL CELL POWER GENERATION SYSTEM**

(30) Priority: 25.11.2020 JP 2020195389
(71) Applicant: Suzuki Motor Corporation, Shizuoka 432-8611 (JP)
(72) Inventor: WATANABE, Gaku, Hamamatsu-shi, Shizuoka, 432-8611 (JP); IKEYA, Kengo, Hamamatsu-shi, Shizuoka, 432-8611 (JP)
(74) Representative: Haseltine Lake Kempner LLP

(57) **Abstract**

A fuel cell system includes a fuel cell, accessories, and a control device. The fuel cell is configured to generate power through an electrochemical reaction by being supplied with oxidant gas and fuel gas. The accessories are related to operation of the fuel cell. The control device is configured to control power generation of the fuel cell. The control device monitors efficiency of the fuel cell during power generation of the fuel cell. When the control device detects any change in the efficiency of the fuel cell, the control device changes a generated current of the fuel cell to the most efficient current at which the efficiency is the highest and makes the fuel cell continue generating power.

## Description

### BACKGROUND OF THE INVENTION

### Field of the Invention

The present invention relates to a fuel cell system and a fuel cell power generation system.

### Description of the Related Art

A power supply system having a fuel cell as an energy source is known. By operating under power generation conditions of the best fuel conversion efficiency, the power supply system has high energy density and power density, and thereby deals with large variation in power consumption (see, for example, Patent Literature 1 (JP 2008-192549 A)).

Here, the energy density is electrical energy that can be supplied per unit mass or unit volume of a battery. Power density is an output per unit mass or unit volume of the battery. The energy density and the power density represent characteristics of the battery.

A fuel-cell vehicle is known which uses a motor as a driving source and carries a fuel cell and a battery as energy sources for the motor. The fuel-cell vehicle makes the output of the fuel cell keep track of the power required by the motor. With the fuel-cell vehicle, if fuel-cell output falls short of meeting power demand from the motor, power may be supplemented by the battery.

However, power generation efficiency of a fuel cell varies with output. Therefore, depending on the power demand from the motor, the fuel cell may produce output in a region with low power generation efficiency. Besides, voltage variation due to output variation accelerate deterioration of the fuel cell. That is, there is a problem in that when the fuel cell is used under conditions of large output variation, performance of the fuel cell falls in a short time without lasting for a long time.

Therefore, it is desired that in the fuel-cell vehicle, power is generated with an output, i.e., a current, which allows the entire fuel cell system including fuel cell accessories to operate most efficiently during driving. Consequently, improvement of the fuel cell in power generation efficiency can be expected. Hereinafter, the current which allows the entire fuel cell system including fuel cell accessories to operate most efficiently during driving will be referred to as the "most efficient current."

The power generation efficiency of the fuel cell contributes most greatly to the power generation efficiency of the entire fuel-cell vehicle. Therefore, if the power generation efficiency of the fuel cell can be improved, the power generation efficiency of the entire fuel-cell vehicle can consequently be improved, i.e., fuel economy can be improved, and a driving range of the vehicle can be extended in turn. Thus, there is demand for a technique which allows the entire fuel cell system including fuel cell accessories to generate power at the most efficient current during driving of the vehicle.

### SUMMARY OF THE INVENTION

An object of the present invention is to provide a fuel cell system and fuel cell power generation system that allows the entire fuel cell system including fuel cell accessories to continue power generation at the most efficient current by keeping track of efficiency varying according to the circumstances during driving of a vehicle.

To solve the above problem, a fuel cell system according to the present invention includes a fuel cell, accessories, and a control device. The fuel cell is configured to generate power through an electrochemical reaction by being supplied with oxidant gas and fuel gas. The accessories are related to operation of the fuel cell. The control device is configured to control power generation of the fuel cell. The control device monitors efficiency of the fuel cell during power generation of the fuel cell. When the control device detects any change in the efficiency of the fuel cell, the control device changes a generated current of the fuel cell to the most efficient current at which the efficiency is the highest and makes the fuel cell continue generating power.

Further, a fuel cell system according to the present invention includes: a fuel cell configured to generate power through an electrochemical reaction by being supplied with oxidant gas and fuel gas; accessories related to operation of the fuel cell; a converter configured to convert a generated current of the fuel cell; and a control device configured to control power generation of the fuel cell, wherein the control device monitors efficiency of the fuel cell via a monitoring unit during power generation of the fuel cell, and the control device makes the fuel cell generate power at the most efficient current at which the fuel cell operates most efficiently, and when any change in the efficiency of the fuel cell is detected by the monitoring unit, the control device changes the generated current to a current value at which the efficiency is the highest and makes the fuel cell generate power at the most efficient current after the change in the efficiency.

Also, a fuel cell system according to the present invention includes: a fuel cell configured to generate power through an electrochemical reaction by being supplied with oxidant gas and fuel gas; accessories related to operation of the fuel cell; and a control device configured to control power generation of the fuel cell, wherein during power generation of the fuel cell, the control device makes the fuel cell continue generating power by minutely changing a generated current of the fuel cell and thereby bringing the generated current close to the most efficient current at which the fuel cell operates efficiently.

Furthermore, a fuel cell power generation system according to the present invention includes: the fuel cell system; and a secondary battery, wherein the fuel cell power generation system has a stop mode for stopping power generation of the fuel cell during operation of the fuel cell power generation system such that a state of charge of the secondary battery does not exceed an upper limit, a high-efficiency mode for making the fuel cell generate power at the most efficient current and compensating for a shortfall in power output in meeting power demand to the fuel cell power generation system with the secondary battery, a first high-load mode for compensating for output in excess of maximum output of the secondary battery by making power output of the fuel cell greater than power output at the most efficient current when the power demand to the fuel cell power generation system is greater than a sum of the power output at the most efficient current and the maximum output of the secondary battery, a second high-load mode for mitigating a decline rate of the state of charge of the secondary battery by making the power output of the fuel cell greater than the power output at the most efficient current when the state of charge of the secondary battery falls, and a third high-load mode for making the fuel cell generate power at a maximum output such that the state of charge of the secondary battery does not fall below a lower limit.

The present invention can provide a fuel cell system and fuel cell power generation system that allows the entire fuel cell system including fuel cell accessories to continue power generation at the most efficient current by keeping track of efficiency varying according to the circumstances during driving of a vehicle.

### BRIEF DESCRIPTION OF THE DRAWINGS

Fig. 1 is a configuration diagram of a fuel cell system according to an embodiment of the present invention;
Fig. 2 is a diagram explaining calculation of fuel cell efficiency in the fuel cell system and a fuel cell power generation system according to the embodiment of the present invention;
Fig. 3 is a flowchart showing how to check the most efficient current of a fuel cell in the fuel cell system and fuel cell power generation system according to the embodiment of the present invention;
Fig. 4 is a flowchart showing how to check the most efficient current of a fuel cell in a fuel cell power generation system according to a variation of the embodiment of the present invention;
Fig. 5 is a diagram showing a relationship between a state of charge and required power of the fuel cell in the fuel cell power generation system according to the variation of the embodiment of the present invention;
Fig. 6 is a diagram showing a relationship between power demand to the fuel cell power generation system and the state of charge of a secondary battery in the fuel cell power generation system according to the variation of the embodiment of the present invention; and
Fig. 7 is a diagram showing a relationship between the power demand to the fuel cell power generation system and the state of charge of the secondary battery in the fuel cell power generation system according to the variation of the embodiment of the present invention.

### DETAILED DESCRIPTION

An embodiment of the present invention will be described below with reference to the accompanying drawings.

An embodiment of a fuel cell system and a fuel cell power generation system according to the present invention will be described in detail below with reference to the accompanying drawings. Note that in different drawings, same or equivalent components are denoted by the same reference signs.

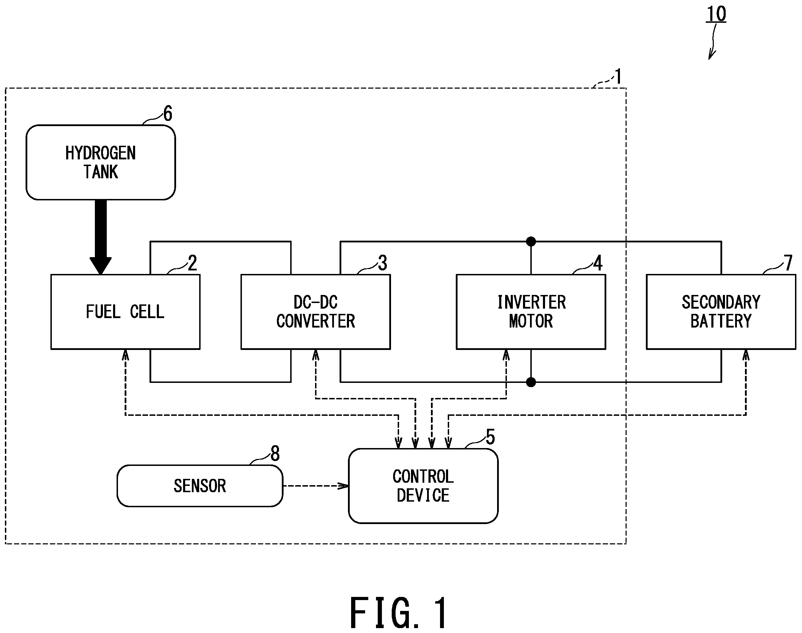

Fig. 1 is a configuration diagram of the fuel cell system according to the embodiment of the present invention.

The fuel cell power generation system 10 according to the present embodiment includes a fuel cell system 1 and a secondary battery (rechargeable battery) 7. The fuel cell system 1 includes a fuel cell 2 configured to generate power by reacting oxidant gas with fuel gas, a DC-DC converter 3 configured to adjust a voltage of the fuel cell 2 by controlling a current of the fuel cell 2, an inverter motor 4 configured to convert received electric power into a driving force, thereby moving a vehicle and generating a regeneration current, various sensors 8 configured to detect user (driver) actions such as depression amounts of accelerator/brake pedal of the vehicle as well as vehicle conditions such as ambient temperature of the vehicle, a control device 5 configured to govern operations of various parts based on signals from the sensors 8, and a hydrogen tank 6 configured to store hydrogen gas serving as a fuel gas. The secondary battery 7 gets charged with power generated by the fuel cell 2 and outputs a resulting battery charge. That is, the secondary battery 7 receives the current from the DC-DC converter 3 and the regeneration current from the inverter motor 4 and thereby gets charged with power. Then, the secondary battery 7 supplies the charged power to the inverter motor 4.

In the fuel cell system 1, the fuel cell 2 generates power by causing air supplied as oxidant gas through a non-illustrated air supply passage to react with hydrogen supplied as a fuel gas through a non-illustrated hydrogen supply passage from the hydrogen tank 6. The air used for power generating reaction of the fuel cell 2 is discharged through a non-illustrated air discharge passage. The fuel cell 2 is cooled by a cooling passage that circulates a non-illustrated cooling medium.

The fuel cell system 1 supplies the power generated by the fuel cell 2 to a non-illustrated load. For example, when the fuel cell system 1 is installed on a vehicle, the load includes the inverter motor 4 serving as a drive motor that drives driving wheels. The inverter motor 4 is connected to the fuel cell 2. Note that the drive motor runs by drawing power mainly from the secondary battery 7. The drive motor may be mounted on the front wheel side, the rear wheel side, or both front and rear wheel sides of the vehicle.

The fuel cell 2 includes a large number of unit cells stacked together. Therefore, the fuel cell 2 is also referred to as a fuel cell stack. Using a unit cell as the smallest unit, the fuel cell 2 is a fuel cell stack made up of dozens to hundreds of unit cells stacked together.

The fuel cell 2 includes plural unit cells stacked together, a pair of end plates sandwiching the stacked unit cells from both sides, and a fastening member fixing the pair of end plates to a stacked structure of the unit cells.

Each of the unit cells includes a membrane electrode assembly (MEA) formed by integrating a fuel electrode (anode), a solid polymer membrane (electrolyte), and an air electrode (cathode); and a pair of separators sandwiching the membrane electrode assembly from front and rear. The separators include supply passages for reactant gases.

Each of the unit cells is supplied with oxidant gas and fuel gas as reactant gases. The oxidant gas and the fuel gas react with each other across the membrane electrode assembly, thereby generating a voltage in each of the unit cells. A sum total of the voltages generated in the unit cells constitutes an output voltage of the fuel cell 2.

The air supply passage through which air is supplied to the fuel cell 2 is provided upstream of the fuel cell 2 along a flow of the oxidant gas. Accessories are installed on the air supply passage, including a non-illustrated compressor configured to supply air as oxidant gas to the fuel cell 2 and a non-illustrated intercooler configured to cool the air compressed to high temperature.

The compressor compresses sucked air and sends the compressed air into the air supply passage. The intercooler cools the compressed air if the compressed air is too high in temperature to be supplied to the fuel cell 2.

The air discharge passage is provided downstream of the fuel cell 2 along the flow of the oxidant gas. Accessories such as a non-illustrated pressure regulating valve serving as a back-pressure valve are installed on the air discharge passage. The pressure regulating valve can change pressure loss on the exhaust side of the fuel cell 2 and thereby change flow rate of air flowing to the fuel cell 2.

Accessories installed on the hydrogen supply passage include a non-illustrated pressure regulator configured to reduce pressure of hydrogen gas stored in the hydrogen tank 6 to a pressure suitable for fuel gas of the fuel cell 2, a non-illustrated injector configured to supply hydrogen gas received from the hydrogen tank 6 to the fuel cell 2, and a purge valve. The hydrogen gas stored in the hydrogen tank 6 is reduced in pressure by the pressure regulator and supplied to the fuel cell 2. The purge valve exhausts fuel gas through the hydrogen supply passage. The fuel gas exhaust prevents concentration of the fuel gas from being decreased by nitrogen unavoidably penetrating the fuel cell through an oxidant supply path as power generating reaction continues, and thereby allows power generation to continue in a stable manner. Besides, the fuel gas exhaust discharges water produced by the reaction.

The air supplied to the fuel cell 2 through the air supply passage is divided among respective cathode-side supply paths of the plural stacked unit cells. The divided air flows along cathode-side inner surfaces of the respective membrane electrode assemblies and then discharged to the air discharge passage.

The hydrogen supplied to the fuel cell 2 through the hydrogen supply passage is divided among respective anode-side supply paths of the plural stacked unit cells. The divided hydrogen flows along anode-side inner surfaces of the respective membrane electrode assemblies and then is discharged out of the fuel cell 2.

Accessories installed on a cooling passage include a non-illustrated radiator configured to cause the cooling medium that cools the fuel cell 2 to radiate heat, a non-illustrated fan configured to send cooling air to the radiator, and a non-illustrated pump configured to circulate the cooling medium.

The DC-DC converter 3 has a function to boost a DC voltage supplied from the secondary battery 7 and output the resulting boosted DC voltage to the inverter motor 4, and a function to step down DC power generated by the fuel cell 2 or regenerative electric power recovered via regenerative braking by the inverter motor 4 and to charge the secondary battery 7 with the stepped-down power. These functions of the DC-DC converter 3 control charging and discharging of the secondary battery 7. Also, power generation (output voltage and output current) of the fuel cell 2 is controlled by voltage conversion control of the DC-DC converter 3.

The control device 5 is a so-called Engine Control Module (ECM). The control device 5 is connected to the fuel cell 2, the DC-DC converter 3, the inverter motor 4, and the secondary battery 7 via non-illustrated signal lines. The control device 5 controls operations of the fuel cell 2, DC-DC converter 3, inverter motor 4, as well as charging of the secondary battery 7. Note that the control device 5 may include operation control of the above-mentioned load.

The control device 5 includes, for example, a central processing unit (CPU, not shown); an auxiliary memory (e.g., read only memory (ROM), not shown) configured to store various operation programs, parameters, and the like executed (processed) by the central processing unit; and a main memory (e.g., random access memory (RAM), not shown) in which working areas are dynamically secured for the programs.

The fuel cell system 1 is equipped with various sensors 8 configured to detect user (driver) actions such as depression amounts of accelerator/brake pedal of the vehicle as well as vehicle conditions such as ambient temperature of the vehicle. Based on information acquired from the various sensors 8, the control device 5 controls operation of the fuel cell system 1.

The various sensors 8 include, for example, a fuel cell output sensor configured to measure an output current of the fuel cell 2, accessory output sensors configured to measure current consumption of accessories, accessory input sensors configured to measure voltages applied to the accessories, and a system output sensor configured to measure an output current and output voltage of the fuel cell system 1.

Based on information acquired from the various sensors 8, the control device 5 controls power generation of the fuel cell such that the entire system including the accessories of the fuel cell 2 will generate power at the most efficient current during the operation of the fuel cell system 1.

In the fuel cell system 1 configured as described above, the control device 5 makes output of the fuel cell 2 keep track of power required by the inverter motor 4. If the output of the fuel cell 2 falls short of meeting power demand from the inverter motor 4, the fuel cell system 1 makes up for the shortfall with power from the secondary battery 7, under the control of the control device 5.

However, depending on the power demand from the inverter motor 4, the fuel cell 2, whose power generation efficiency varies with the output, may produce output in a region with low power generation efficiency. The voltage variation due to output variation accelerates deterioration of the fuel cell 2. That is, when the fuel cell 2 is used under conditions of large output variation, there is concern that performance of the fuel cell 2 may degrade in a short time without lasting for a long time.

Thus, based on information acquired by the control device 5 from the various sensors 8, the fuel cell system 1 according to the present embodiment monitors efficiency of the fuel cell 2 during power generation of the fuel cell 2.

Next, description will be given of power generation control over the fuel cell 2 in the fuel cell system 1 and fuel cell power generation system 10 according to the present embodiment.

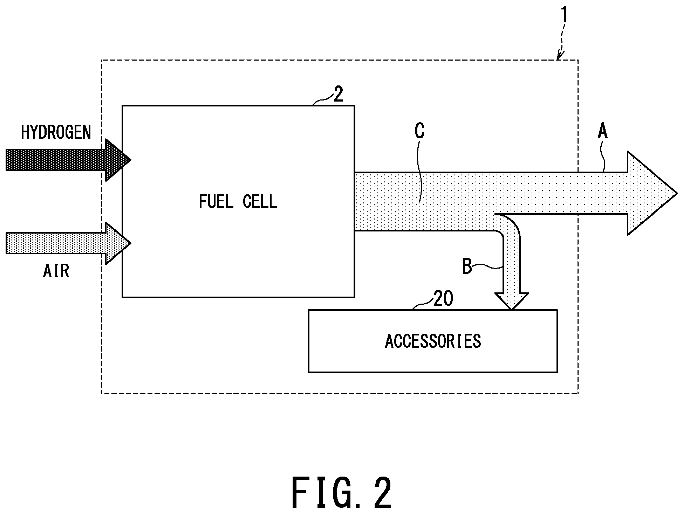

Fig. 2 is a diagram explaining calculation of fuel cell efficiency in the fuel cell system and fuel cell power generation system according to the embodiment of the present invention.

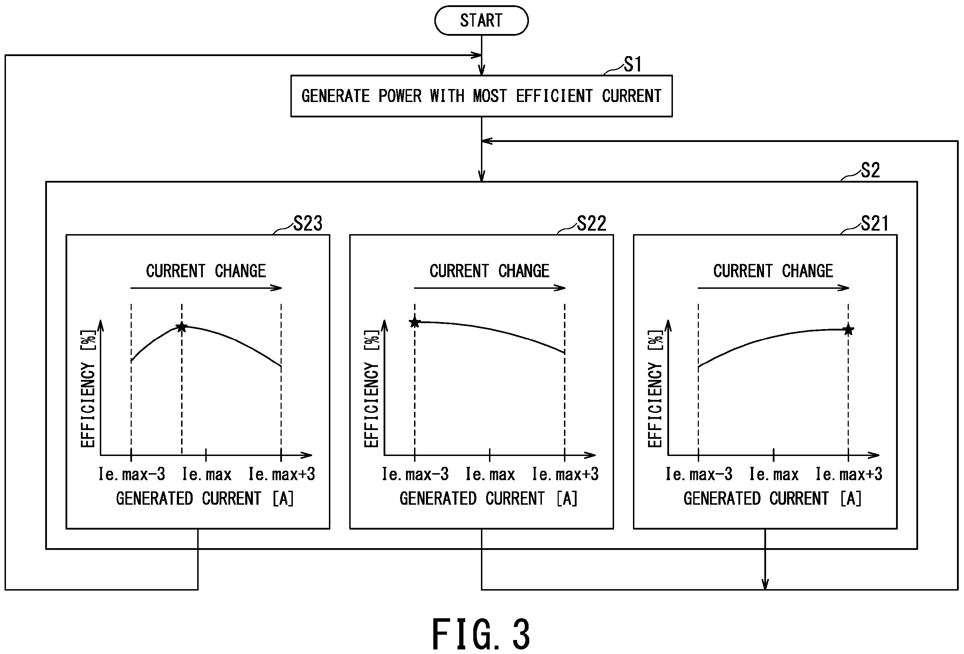

Fig. 3 is a flowchart showing how to check the most efficient current of the fuel cell in the fuel cell system and fuel cell power generation system according to the embodiment of the present invention, where Ie.max is the most efficient current.

In the fuel cell power generation system 10 including the fuel cell system 1, the control device 5 calculates the efficiency of the fuel cell 2. Specifically, the efficiency of the fuel cell 2 is given as a quotient of an amount of energy output from the fuel cell 2 divided by an amount of hydrogen used by the fuel cell 2.

Here, the amount of hydrogen used by the fuel cell 2 is calculated from the current value of the fuel cell 2 and the number of cells (the number of stacked layers) of the fuel cell 2. The amount of energy output from the fuel cell 2 is equal to an output current C of the fuel cell 2. As shown in Fig. 2, the output current C of the fuel cell 2 is the sum of an output A of the fuel cell system 1 (i.e., the output current and output voltage of the fuel cell system 1) and power consumption B of accessories 20 (the current consumption of the accessories 20 and the voltages applied to the accessories 20), which are detected by the various sensors 8 (see Fig. 1).

As shown in Fig. 3, based on measurement results measured by the various sensors 8, the control device 5 of the fuel cell system 1 causes the fuel cell 2 to generate power such that a generated current of the fuel cell 2 is the most efficient current, at which the efficiency is the highest (step S1).

The control device 5 constantly senses the efficiency of the fuel cell 2 using the various sensors 8 during the operation of the fuel cell system 1 (step S2). For example, when any variation in the calculated efficiency is detected, the control device 5 varies the generated current of the fuel cell 2 in a desired range (e.g., in a range of -3 A to +3 A). The control device 5 repeats varying the generated current of the fuel cell 2 until a peak appears (steps S21 and S22). When a peak appears (step S23), the control device 5 calculates the most efficient current at that time and makes the fuel cell 2 continue generating power using the calculation result as the new one of the most efficient current.

As described above, the control device 5 of the fuel cell system 1 according to the present embodiment constantly monitors the efficiency of the fuel cell 2 during power generation of the fuel cell 2, changes the generated current of the fuel cell 2 to the most efficient current, at which the efficiency is the highest, and causes power generation to be continued if any change in the efficiency of the fuel cell 2 is detected. This allows the entire fuel cell system 1 including the accessories to continue power generation at the most efficient current by keeping track of efficiency varying according to the circumstances during driving of the vehicle.

In so doing, since the most efficient current is changed only when any change in the efficiency of the fuel cell 2 is detected, power generation can be continued efficiently.

When the fuel cell system 1 is applied to a vehicle, the most efficient current also varies with the running conditions of the vehicle, the degradation state of the fuel cell 2, and the wet condition of electrolyte, but since the efficiency of the fuel cell 2 is constantly monitored, power generation can be continued at the most efficient current according to circumstances.

Furthermore, by improving the power generation efficiency of the fuel cell 2 that contributes most greatly to the power generation efficiency of the entire vehicle, the power generation efficiency of the entire vehicle can be improved. This makes it possible to extend a driving range of the vehicle.

Moreover, the most efficient current is determined based on the peak at which the efficiency of the fuel cell 2 becomes the highest when the current value of the generated current is changed. That is, since changes in the efficiency itself can always be calculated, after the efficiency is improved by changing the current, a point at which the current begins to fall can be detected as a peak, and the detected peak can be set as a new value of the most efficient current, whereby the most efficient current that may vary with circumstances can be obtained more accurately. Since changes in the efficiency of the fuel cell 2 are constantly monitored, it is possible to promptly respond to any change in the efficiency, and since changes in the efficiency can be followed, changes in the most efficient current can be limited to the minimum necessary and the amount of change in the most efficient current in searching for a peak after the efficiency change can be reduced. In this way, since the most efficient current can be found even if the amount of change is small, a generating duration of the fuel cell 2 can be prolonged accordingly.

During power generation of the fuel cell 2, the control device 5 may make the fuel cell 2 continue generating power by minutely changing the generated current of the fuel cell 2 and thereby bringing the generated current close to the most efficient current at which the fuel cell 2 operates efficiently.

That is, the fuel cell system 1 includes the fuel cell 2 configured to generate power through an electrochemical reaction by being supplied with oxidant gas and fuel gas, the accessories 20 related to operation of the fuel cell 2, and the control device 5 configured to control power generation of the fuel cell 2, wherein during power generation of the fuel cell 2, the control device 5 may make the fuel cell 2 continue generating power by minutely changing the generated current of the fuel cell 2 and thereby bringing the generated current close to the most efficient current at which the fuel cell 2 operates efficiently.

In this case, because feedback control is usually performed by minutely changing the generated current of the fuel cell 2, it is possible to check for any change in the efficiency of the fuel cell 2 before a significant deviation from an ideal most efficient current occurs and to change the current value according to the change in the efficiency of the fuel cell 2 so as to always approach the most efficient current which is optimal and ideal.

The efficiency of the fuel cell 2 is calculated from the output current of the fuel cell 2 and the current consumption of the accessories 20 and the voltages applied to the accessories 20, or from the output current of the fuel cell 2 and the output current and output voltage of the fuel cell system 1. That is, the changes in the efficiency of the fuel cell 2 can be detected from the output A of the fuel cell system 1 or the power consumption B of accessories 20 once the output current C of the fuel cell 2 is known. Unlike when the efficiency is found using a hydrogen sensor, the efficiency can be found even if hydrogen consumption is not stable. It is also possible to respond sensitively to changes in the efficiency, which enables to calculate the efficiency at all times. That is, the efficiency of the fuel cell 2 can be calculated simply and accurately.

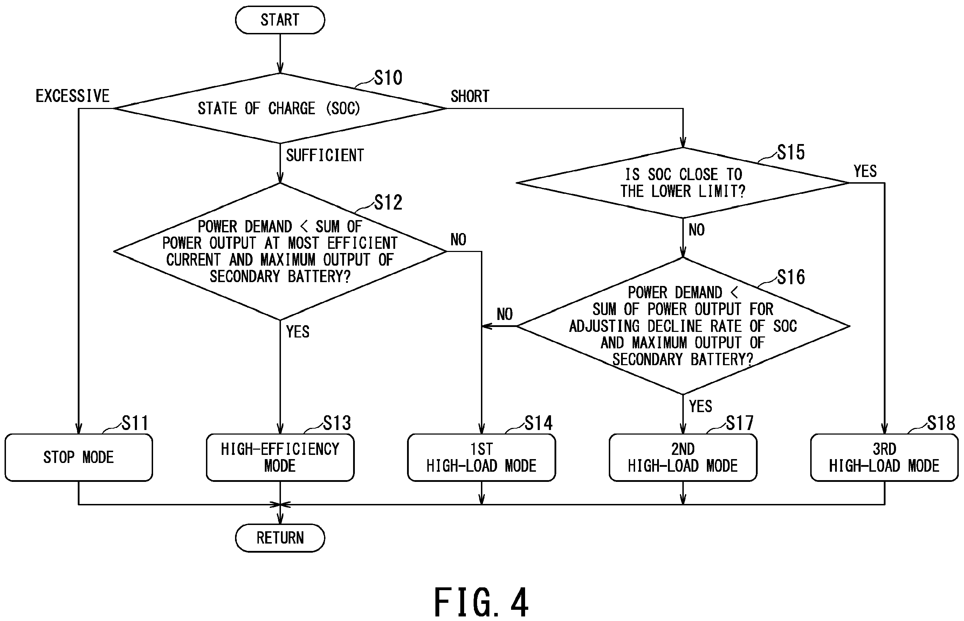

Fig. 4 is a flowchart showing how to check the most efficient current of a fuel cell in a fuel cell power generation system according to a variation of the embodiment of the present invention.

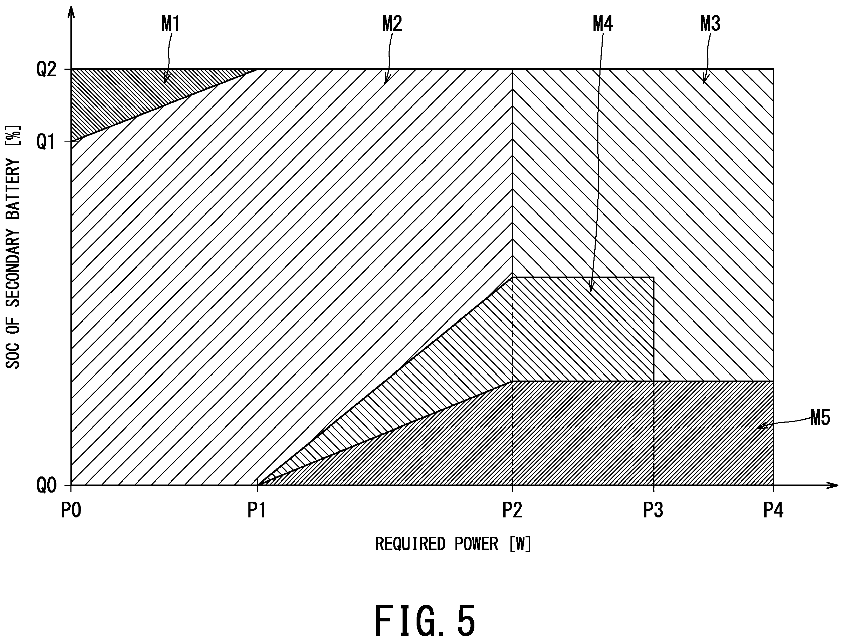

Fig. 5 is a diagram showing a relationship between a state of charge and required power of the fuel cell in the fuel cell power generation system according to the variation of the embodiment of the present invention.

The power generation control over the fuel cell 2 according to the present invention is not limited to the embodiment described above. That is, as a method for controlling power generation of the fuel cell 2, the control device 5 of the fuel cell power generation system 10 may have a stop mode M1, a high-efficiency mode M2, a first high-load mode M3, a second high-load mode M4, and a third high-load mode M5.

Note that in Fig. 5, the Y-axis represents a state of charge (SOC) of the secondary battery 7 and the X-axis represents power demand to the fuel cell power generation system 10. Also in Fig. 5, point Q1 indicates a control center of the state of charge of the secondary battery 7 and point Q0 indicates a lower limit of the state of charge of the secondary battery 7. Also in Fig. 5, point P0 indicates a lower limit of the secondary battery 7 and point P4 indicates the sum of maximum output of the secondary battery 7 and maximum output of the fuel cell 2. Furthermore, point P1 indicates output at the most efficient current of the fuel cell 2.

As shown in Fig. 5, the stop mode M1 is a mode in which power generation of the fuel cell 2 is stopped such that the state of charge of the secondary battery 7 will not exceed an upper limit (point Q2 in Fig. 5) when the state of charge of the secondary battery 7 is close to the upper limit (e.g., when the vehicle is stopped or running at low speed).

The high-efficiency mode M2 is a mode for making the fuel cell generate power at the most efficient current and compensating for a shortfall in power output in meeting power demand to the fuel cell power generation system 10 with the secondary battery 7 when the power demand to the fuel cell power generation system 10 is smaller than a sum of the power output at the most efficient current and the maximum output of the secondary battery 7 (e.g., when the vehicle is running at or below medium speed on level ground).

The first high-load mode M3 is a mode for compensating for output in excess of the maximum output of the secondary battery 7 by making the power output of the fuel cell 2 greater than the power output at the most efficient current when the power demand to the fuel cell power generation system 10 is greater than the sum (point P2) of the power output at the most efficient current and the maximum output of the secondary battery 7 (e.g., when the state of charge of the secondary battery 7 is in normal state and the vehicle is running at high speed).

The second high-load mode M4 is a mode for mitigating a decline rate of the state of charge of the secondary battery 7 by making the power output of the fuel cell 2 greater than the power output at the most efficient current when the state of charge of the secondary battery falls (e.g., when the state of charge of the secondary battery 7 is approaching close to the lower limit and the vehicle is running at or below medium speed on level ground). That is, by lowering power required from the fuel cell power generation system 10 to a position of point P3 lower than the maximum output of the fuel cell 2 (e.g., 60% of the maximum output of the fuel cell 2), the secondary battery 7 can be urged to be charged with the remaining output of the fuel cell 2.

The third high-load mode M5 is a mode for making the fuel cell 2 generate power at the maximum output such that the state of charge of the secondary battery 7 will not fall below a lower limit when the state of charge of the secondary battery 7 is close to the lower limit (i.e., the state of charge of the secondary battery 7 cannot be lowered any more). That is, by lowering the power required from the fuel cell power generation system 10 to a position of point P4 lower than the maximum output of the fuel cell 2, the secondary battery 7 can be urged to be charged with the remaining output of the fuel cell 2. Specifically, as shown in Figs. 4 and 5, the control device 5 senses the state of charge (SOC) of the secondary battery 7 using the above-mentioned various sensors 8 during operation of the fuel cell power generation system 10 (step S10). When it is detected that the state of charge of the secondary battery 7 is excessive, i.e., close to the upper limit, the control device 5 switches power generation status of the fuel cell 2 to the stop mode M1 and stops power generation of the fuel cell 2 such that the state of charge of the secondary battery 7 will not exceed the upper limit (step S11).

On the other hand, if it is detected that the state of charge of the secondary battery 7 is in normal state (i.e., in sufficient state) and that the power demand to the fuel cell power generation system 10 is smaller than the sum of the power output at the most efficient current and the maximum output of the secondary battery 7 (YES in step S12), the control device 5 switches the power generation status of the fuel cell 2 to the high-efficiency mode M2 and compensates for a shortfall in power output in meeting power demand to the fuel cell power generation system 10 with the secondary battery 7 by making the fuel cell 2 generate power at the most efficient current (step S13).

In so doing, if it is detected that the power demand to the fuel cell power generation system 10 is greater than the sum of the power output at the most efficient current and the maximum output of the secondary battery 7 (NO in step S12), the control device 5 switches the power generation status of the fuel cell 2 to the first high-load mode M3, and compensates for output in excess of the maximum output of the secondary battery 7 by making the power output of the fuel cell 2 greater than the power output at the most efficient current (step S14).

When the state of charge (SOC) of the secondary battery 7 is sensed using the above-mentioned various sensors 8 during operation of the fuel cell power generation system 10 (step S10), if the state of charge of the secondary battery 7 is in shortage, the control device 5 determines whether the state of charge of the secondary battery 7 is close to the lower limit (step S15). Then, if it is detected that, although the state of charge of the secondary battery 7 is not close to the lower limit (NO in step S15), the power demand to the fuel cell power generation system 10 is smaller than the sum of the power output for adjusting the decline rate of the state of charge of the secondary battery 7 and the maximum output of the secondary battery 7 (i.e., the state of charge of the secondary battery 7 has fallen) (YES in step S16), the control device 5 switches the power generation status of the fuel cell 2 to the second high-load mode M4 and mitigates the decline rate of the state of charge of the secondary battery 7 by making the power output of the fuel cell 2 greater than the power output at the most efficient current (step S17). If it is detected that the power demand to the fuel cell power generation system 10 is greater than the sum of the power output for adjusting the decline rate of the state of charge of the secondary battery 7 and the maximum output of the secondary battery 7 (NO in step S16), the control device 5 goes to step S14 described above, switches the power generation status of the fuel cell 2 to the first high-load mode M3, and compensates for output in excess of the maximum output of the secondary battery 7 by making the power output of the fuel cell 2 greater than the power output at the most efficient current.

Upon detecting that the state of charge of the secondary battery 7 is close to the lower limit (i.e., the state of charge of the secondary battery 7 cannot be lowered any more), (YES in step S15), the control device 5 switches the power generation status of the fuel cell 2 to the third high-load mode M5 and makes the fuel cell 2 generate power at the maximum output such that the state of charge of the secondary battery 7 will not fall below the lower limit (step S18).

Then, returning to step S10, the control device 5 senses the state of charge of the secondary battery 7 using the above-mentioned various sensors 8 during operation of the fuel cell power generation system 10 and repeats the routine of any of steps S10 to S18 described above.

In this way, the fuel cell power generation system 10 uses currents other than the most efficient current for power generation of the fuel cell 2 only under limited conditions, and consequently it becomes possible to increase the chances of making the fuel cell 2 generate power at the most efficient current without any shortage. When the power demand to the fuel cell power generation system 10 is greater than the sum of the power output at the most efficient current and the maximum output of the secondary battery 7, although the output of the fuel cell 2 becomes higher than the most efficient current, as long as generated output of the secondary battery 7 can be set to maximum output and can be applied as compensation, the output of the fuel cell 2 can be brought down close to the most efficient current, and the efficiency can be improved.

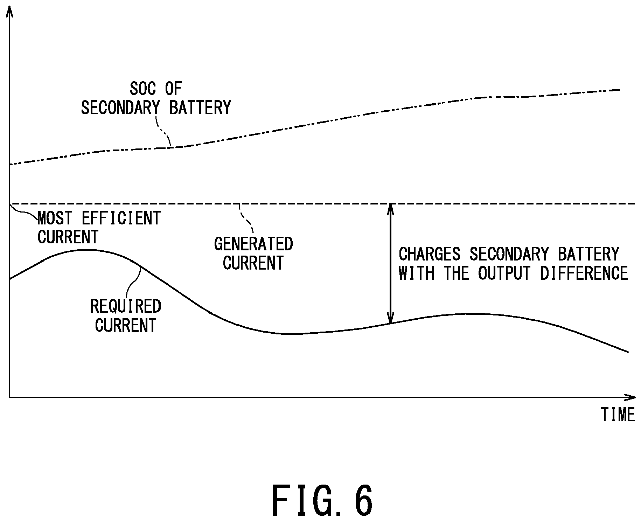

Fig. 6 is a diagram showing a relationship between power demand to the fuel cell power generation system 10 and the state of charge of a secondary battery 7 in the fuel cell power generation system 10 according to the variation of the embodiment of the present invention.

As shown in Fig. 6, in the high-efficiency mode M2, when the power demand to the fuel cell power generation system 10 is smaller than the power output of the fuel cell 2 at the most efficient current, the fuel cell power generation system 10 charges the secondary battery 7 with an output difference.

This allows any surplus power to be used to charge the secondary battery 7 while increasing the number of situations in which power is generated at the most efficient current of the fuel cell 2, and thereby eliminating waste of electricity and extending the life of the fuel cell 2, i.e., extend the driving range of a vehicle when the fuel cell 2 is applied to the vehicle.

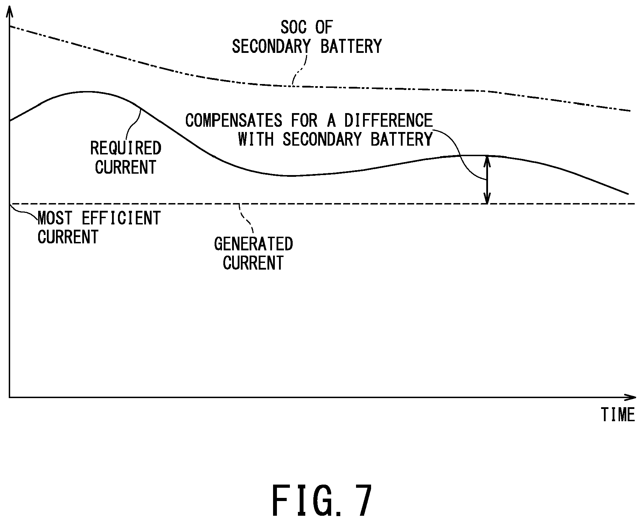

Fig. 7 is a diagram showing a relationship between the power demand to the fuel cell power generation system 10 and the state of charge of the secondary battery 7 in the fuel cell power generation system 10 according to the variation of the embodiment of the present invention.

As shown in Fig. 7, in the third high-load mode M5, when the power demand to the fuel cell power generation system 10 remains near to or higher than the maximum output of the fuel cell 2, the fuel cell power generation system 10 may limit and keep the power demand to the fuel cell power generation system 10 at or below the maximum output of the fuel cell 2.

When the power demand to the fuel cell power generation system 10 is decreased and the fuel cell is made to generate power corresponding to or higher than the demand, the secondary battery 7 can be charged such that the state of charge will not fall below the lower limit. Consequently, when the use of the fuel cell system 1 (the running situation of the vehicle if the system is applied to the vehicle) changes, it is possible to increase the number of situations in which power can be adequately generated by adjusting the most efficient current.

Furthermore, the fuel cell power generation system 10 may monitor the efficiency of the fuel cell 2 in the second high-load mode M4, and if the power demand to the fuel cell power generation system 10 is equal to or lower than a predetermined value, the fuel cell power generation system 10 may bring the output of the fuel cell 2 close to the most efficient current such that the decline rate of the state of charge of the secondary battery 7 will be equal to or lower than a predetermined rate.

In the second high-load mode M4, the fuel cell power generation system 10 sets the output of the fuel cell 2, for example, to around 60% for the purpose of mitigating the decline rate of the state of charge of the secondary battery, when the power demand to the fuel cell power generation system 10 is low, the decline rate of the state of charge of the secondary battery can be reduced even if the output of the fuel cell 2 is not set to 60%. By reducing the output of the fuel cell 2 to below 60%, the output of the fuel cell 2 can be brought as close to the most efficient current as possible, thereby improving the efficiency of the fuel cell 2.

## Claims

1. A fuel cell system comprising:
a fuel cell configured to generate power through an electrochemical reaction by being supplied with oxidant gas and fuel gas;
accessories related to operation of the fuel cell; and
a control device configured to control power generation of the fuel cell,
wherein the control device monitors efficiency of the fuel cell during power generation of the fuel cell, and
when detecting any change in the efficiency of the fuel cell, the control device changes a generated current of the fuel cell to the most efficient current at which the efficiency is the highest and makes the fuel cell continue generating power.

2. The fuel cell system according to claim 1, wherein the most efficient current is determined based on a peak at which the efficiency of the fuel cell becomes the highest after a current value of the generated current has been changed.

3. A fuel cell system comprising:
a fuel cell configured to generate power through an electrochemical reaction by being supplied with oxidant gas and fuel gas;
accessories related to operation of the fuel cell; and
a control device configured to control power generation of the fuel cell,
wherein during power generation of the fuel cell, the control device makes the fuel cell continue generating power by minutely changing a generated current of the fuel cell and thereby bringing the generated current close to the most efficient current at which the fuel cell operates efficiently.

4. The fuel cell system according to any one of claims 1 to 3, wherein the efficiency of the fuel cell is calculated from an output current of the fuel cell and current consumption of the accessories and a voltage applied to the accessories, or from the output current of the fuel cell and an output current and an output voltage of the fuel cell system.

5. A fuel cell power generation system comprising:
the fuel cell system according to any one of claims 1 to 4; and
a secondary battery,
wherein the fuel cell power generation system has
a stop mode for stopping power generation of the fuel cell during operation of the fuel cell power generation system such that a state of charge of the secondary battery does not exceed an upper limit,
a high-efficiency mode for making the fuel cell generate power at the most efficient current and compensating for a shortfall in power output in meeting power demand to the fuel cell power generation system with the secondary battery,
a first high-load mode for compensating for output in excess of maximum output of the secondary battery by making power output of the fuel cell greater than power output at the most efficient current when the power demand to the fuel cell power generation system is greater than a sum of the power output at the most efficient current and the maximum output of the secondary battery,
a second high-load mode for mitigating a decline rate of the state of charge of the secondary battery by making the power output of the fuel cell greater than the power output at the most efficient current when the state of charge of the secondary battery falls, and
a third high-load mode for making the fuel cell generate power at a maximum output such that the state of charge of the secondary battery does not fall below a lower limit.

6. The fuel cell power generation system according to claim 5, wherein in the high-efficiency mode, when the power demand to the fuel cell power generation system is smaller than the power output of the fuel cell at the most efficient current, the secondary battery is charged with an output difference between the power demand and the power output of the fuel cell at the most efficient current.

7. The fuel cell power generation system according to claim 5 or 6, wherein in the third high-load mode, when the power demand to the fuel cell power generation system remains near to or higher than the maximum output of the fuel cell, the power demand to the fuel cell power generation system is limited by being kept at or below the maximum output of the fuel cell.

8. The fuel cell power generation system according to any one of claims 5 to 7, wherein in the second high-load mode, the efficiency is monitored, and when the power demand to the fuel cell power generation system is equal to or lower than a predetermined value, output of the fuel cell is brought close to the most efficient current such that the decline rate of the state of charge is equal to or lower than a predetermined rate.
